# EUROPEAN PATENT APPLICATION

(11) **EP 0 983 781 A2**
(43) Date of publication of application: **08.03.2000**
(21) Application number: 99116688.5
(22) Date of filing: 26.08.1999
(51) Int. Cl.: A63F 13/10

(54) **Method of controlling video game apparatus, video game apparatus, and computer-readable medium storing video game program**

(30) Priority: 28.08.1998 JP 24341598
(71) Applicant: Konami Co., Ltd., Kobe-shi, Hyogo 650-0046 (JP)
(72) Inventor: OE, Osamu, Sapporo-shi, Hokkaido 003-0801 (JP)
(74) Representative: TER MEER STEINMEISTER & PARTNER GbR

(57) **Abstract**

A game space is constructed according to given data, and of positions where articles can be placed in the game space, positions of articles to be actually placed in the game space and the number of such articles are determined according to an appearance ratio predetermined for the game space, after which the determined positions are stored. Of pieces of treasure which have been placed in the game space, the number of pieces of genuine treasure is determined according to a value allocating ratio, and the types of the pieces of treasure are randomly determined and stored.

## Description

The present invention relates to a method of controlling a video game apparatus to display on a video display screen thereof an action of a displayed game character determined by the game player, a result of such an action, or both, for the game player to enjoy its own simulated experience through the displayed contents, a video game apparatus that can be controlled by such a method, and a computer-readable medium which stores a video game program for carrying out such a method.

Video games that display a game character whose action is controlled by the game player include action games, combat games, adventure games, role-playing games, simulation games, and games based on combinations of elements of those games. In the action games, the game player operates a manual controller with a plurality of keys to enter commands for controlling a displayed game character to clear obstacles and defeat enemy characters until it reaches the goal. In the combat games, the game player controls the game character with a manual controller to launch various attacks to eliminate LP (life points) of an opponent character controlled by another player of a computer for thereby beating the opponent character. In the adventure games, the game player operates a manual controller to select any one of displayed commands to change stories or endings. In the role-playing games, the game player operates a manual controller to repeat moving fields and battling with enemy characters for thereby growing the game character to aim at clearing events. In the simulation games, the game player operates a manual controller to measure its own ability as an airplane pilot, a military leader, a local government's head, etc. or to compete with another game player or a computer.

In some video games, pieces of equipment, items, coins, etc. (hereinafter collectively referred to as "articles") for the purpose of recovering game character's equipment or LP or increasing game character's ability are placed in a displayed game space. The game player enters a control action via the manual controller to enable the game character to gain an article, equip or use an article, or carry an article, if it is a coin, to a certain place (such as an equipment dealer or an arsenal) to exchange it for a piece of equipment or an item, so that the video game will proceed or develop differently.

When articles in those video games are displayed or gained by the game characters, the game player can immediately recognize what those articles are, i.e., whether they are pieces of equipment, items, or coins, or what effects those articles have, i.e., the value of those articles. The game player can easily judge whether those articles are to be acquired or not, carried (or equipped) or not, or thrown away or not. As a consequence, the game player does not find the video games interesting enough because the video games have few elements of uncertainty.

In those video games, furthermore, positions where articles appear in game spaces and conditions for gaining articles are fixed, e.g., an article appears and can be gained only when the game character clears a certain event. If such positions where articles appear in game spaces and conditions for gaining articles are known from a know-how book, then the game player can easily gain those articles in game spaces. Therefore, the game player will not intend to play in the same game space a plurality of times, and hence finds the video games unattractive.

It is therefore an object of the present invention to provide a method of controlling a video game apparatus, a video game apparatus, and a computer-readable medium which stores a video game program for giving elements of uncertainty to values of articles and positions where articles appear in a video game, thereby to enable the game player to be highly interested in gaining those articles and hence to find the video game interesting and attractive for a long period of time.

To achieve the above object, there is provided in accordance with the present invention a method of controlling a video game apparatus having input means controllable by a game player for entering a command, image display means for generating and displaying a game image including a game space and a game character, article placing means for placing articles with predetermined monetary values in the game space, article placement storing means for storing data of positions where the articles are placed in the game space and data of the monetary values of the articles, acquired article storing means for storing data of articles carried by the game character, and carried money storing means for storing a sum of money carried by the game character and consumable to buy equipment, the method comprising the steps of controlling the input means to store an article acquired by the game character and a monetary value thereof into the acquired article storing means, when the input means is controlled to move the game character to a predetermined position in the game space, exchanging the article stored in the acquired article storing means for an amount of money commensurate with the monetary value of the article, adding the amount of money to the carried money storing means, and deleting the article from the acquired article storing means, and controlling the input means for the game character to buy equipment with the amount of money stored in the carried money storing means.

With the above video game apparatus, the game character cannot immediately equip or use an article placed in a game space when the game character acquires the article, but needs to exchange it for an amount of money commensurate with the monetary value thereof only when the player character moves to a given position, and then buy equipment with the amount of money. Therefore, the game player is required to collect articles with more enthusiasm than with conventional video games, and will be attracted to the video game for an increased period of time.

When the input means is controlled to move the game character to a predetermined position in the game space and the article stored in the acquired article storing means is exchanged for an amount of money commensurate with the monetary value of the article, the monetary value of the article stored in the acquired article storing means is displayed by the image display means. Unless the game character is moved to the predetermined position in the game space, the game player cannot recognize the monetary value of the article. This introduces an element of uncertainty into the video game, which makes the video game more interesting. The articles placed by the article placing means may include an article with no monetary value. Such an article with no monetary value may be treated as garbage, which also introduces an element of uncertainty into the video game.

The game space is divided into a simulated underwater area and a simulated overwater area, the article placing means comprising means for placing articles in the simulated underwater area, with the predetermined position being located in the simulated overwater area. The game space thus created enables the game player to have a realistic feeling of treasure hunting, and makes the video game more attractive.

The input means may be controlled to change the position of the game character in the simulated underwater area, and a game image including a game space and a game character based on the changed position of the game character may be generated and displayed by the image display means. The game image thus generated and displayed allows the game player to enjoy virtual diving and collection of articles in the simulated underwater area, which presents an attractive aspect that is not found in conventional video games.

The game space generated and displayed by the image display means comprises a plurality of stages. The plural stages of the game space produces variations in the video game, which make the video game highly attractive for a long period of time.

The number of articles to be placed by the article placing means and positions where the articles are to be placed thereby are determined based on a predetermined appearance ratio of articles in the game space. Therefore, the positions where articles appear are indefinite, also introducing an element of uncertainty with which the game player finds the video game interesting.

Positions where articles can be placed by the article placing means are determined in advance, and articles to be placed by the article placing means are selected and determined based on an appearance ratio of articles in the game space, which has been predetermined from the determined positions. Consequently, since articles may not necessarily appear in fixed positions, an element of uncertainty is introduced to make the video game attractive to the game player.

The video game described above can be performed by a video game apparatus comprising input means controllable by a game player for entering a command, game space generating means for generating a game space according to prepared data and based on an entered command, game character generating means for generating a game character in the game space according to prepared data and based on an entered command, article placing means for determining an appearance ratio of articles and a value allocating ratio according to prepared data, determining positions where articles are to be placed, of predetermined positions where articles can appear in the game space, based on the appearance ratio, and determining monetary values of the articles placed in the determined positions based on the value allocating ratio, article placement storing means for storing data of positions where the articles are placed in the game space and data of the monetary values of the articles, acquired article storing means for storing data of articles carried by the game character, carried money storing means for storing a sum of money carried by the game character and consumable to buy equipment, article acquisition detecting means for detecting when the game character has acquired an article based on the positions of the game character and the articles in the game space and an entered command, and storing data of the acquired article and a monetary value thereof into the acquired article storing means, article exchange decision means for detecting when the game character has moved to a predetermined position in the game space based on the position of the game character in the game space and an entered command, exchanging the article stored in the acquired article storing means for an amount of money commensurate with the monetary value thereof, adding the amount of money to the carried money storing means, and deleting the article from the acquired article storing means, equipment purchasing means for enabling the game character to buy equipment with the amount of money stored in the carried money storing means based on the position of the game character in the game space and an entered command, and image generating means for generating a game image based on the generated game space and the game character.

The video game described above can also be performed by a computer-readable medium storing a video game program, wherein when the video game program is read by a computer, the video game program controls the computer to implement game space generating means for generating a game space according to prepared data and based on an entered command, game character generating means for generating a game character in the game space according to prepared data and based on an entered command, article placing means for determining an appearance ratio of articles and a value allocating ratio according to prepared data, determining positions where articles are to be placed, of predetermined positions where articles can appear in the game space, based on the appearance ratio, and determining monetary values of the articles placed in the determined positions based on the value allocating ratio, article placement storing means for storing data of positions where the articles are placed in the game space and data of the monetary values of the articles, acquired article storing means for storing data of articles carried by the game character, carried money storing means for storing a sum of money carried by the game character and consumable to buy equipment, article acquisition detecting means for detecting when the game character has acquired an article based on the positions of the game character and the articles in the game space and an entered command, and storing data of the acquired article and a monetary value thereof into the acquired article storing means, article exchange decision means for detecting when the game character has moved to a predetermined position in the game space based on the position of the game character in the game space and an entered command, exchanging the article stored in the acquired article storing means for an amount of money commensurate with the monetary value thereof, adding the amount of money to the carried money storing means, and deleting the article from the acquired article storing means, equipment purchasing means for enabling the game character to buy equipment with the amount of money stored in the carried money storing means based on the position of the game character in the game space and an entered command, and image generating means for generating a game image based on the generated game space and the game character.
FIG. 1 is a perspective view of a video game apparatus for playing a video game according to the present invention;
FIG. 2 is a block diagram of a circuit arrangement of the video game apparatus;
FIGS. 3 through 7 are flowcharts of a processing sequence of a method of controlling the video game apparatus according to the present invention;
FIG. 8 is a view showing a displayed home image of the video game played by the video game apparatus;
FIG. 9 is a view showing a displayed diving-part image of the video game played by the video game apparatus;
FIGS. 10(a), 10(b), and 10(c) are diagrams showing the placement of pieces of treasure;
FIG. 11 is a view showing another displayed diving-part image of the video game played by the video game apparatus; and
FIG. 12 is a block diagram of functions performed by the video game apparatus according to the present invention.

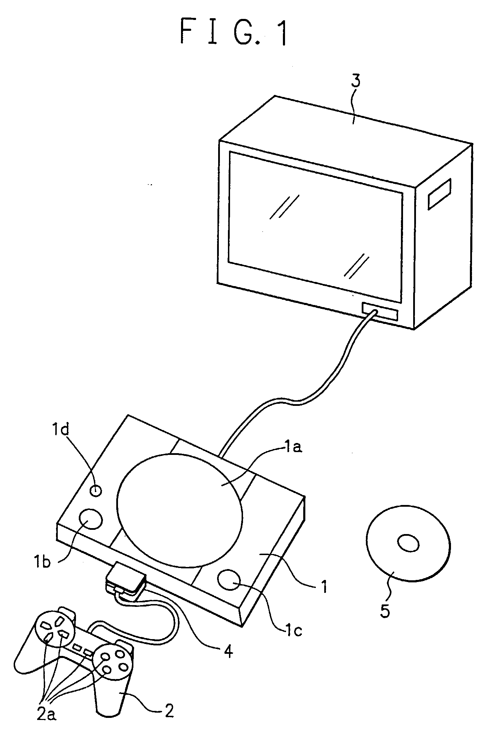

FIG. 1 shows in perspective a video game apparatus for playing a video game according to the present invention. In FIG. 1, the video game apparatus is shown as a video game machine for home use. The video game apparatus comprises a video game machine unit 1, a manual controller 2 having a plurality of control keys 2a for supplying various commands to the video game machine unit 1 in response to control actions of the game player, a display monitor 3 such as a television set or the like connected to the video game machine unit 1 for displaying games images and producing music sounds and sound effects, an external memory 4 such as a memory card detachably connected to the video game machine unit 1 for storing saved data of the video game, and a recording medium 5 such as a CD-ROM for storing a game program and data that can be executed by the video game machine unit 1.

The CD-ROM 5 can be loaded in a CD-ROM drive (not shown) housed in the video game machine unit 1 and openably closed by a lid 1a mounted on an upper panel of the video game machine unit 1. When the CD-ROM 5 is loaded in the CD-ROM drive, the game program and data recorded in the CD-ROM 5 are read into the video game machine unit 1. The video game machine unit 1 has on its upper panel a power supply switch 1b, a button 1c for opening and closing the lid 1a, and a reset switch 1d.

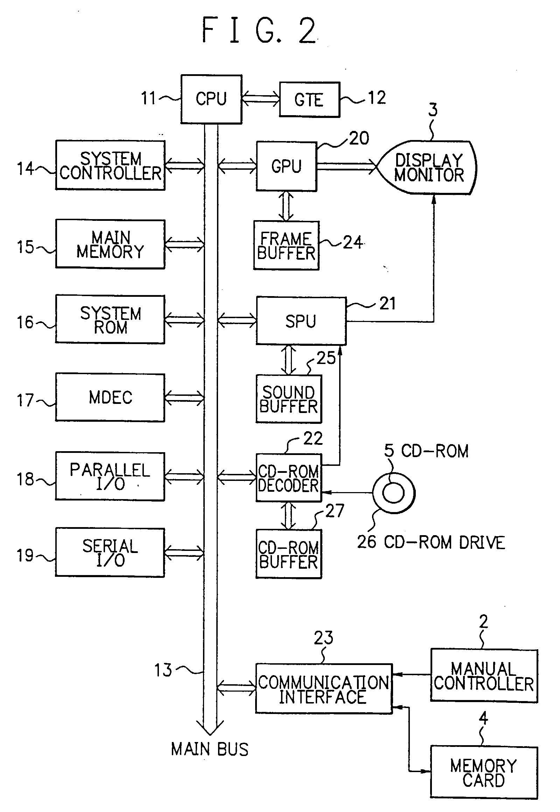

FIG. 2 shows in block form a detailed circuit arrangement of the video game machine unit 1. As shown in FIG. 2, the video game machine unit 1 comprises a CPU (Central Processing Unit) 11, an image data generating processor (GTE) 12 connected directly to the CPU 11, a system controller 14, a main memory 15, a system ROM 16, an image data expansion decoder (MDEC) 17, a parallel interface (I/O) 18, a serial interface (I/O) 19, a graphic processing unit (GPU) 20, a sound processing unit (SPU) 21, a CD-ROM decoder 22, and a communication interface 23 which are connected to the CPU 11 via a main bus 13, a frame buffer 24 connected to the graphic processing unit 20, a sound buffer 25 connected to the sound processing unit 21, and a CD-ROM drive 26 and a CD-ROM buffer 27 which are connected to the CD-ROM decoder 22.

The image data generating processor 12 calculates a large amount of data for coordinate transformation and light source calculations based on instructions from the CPU 11. Main processes carried out by the image data generating processor 12 include a process of determining addresses in displayed areas of images to be processed based on coordinate data, motion data, and rotation data in two- or three-dimensional planes of image data supplied from the CPU 11, a process of returning the determined address to the CPU 11, and a process of calculating brightness of images depending on the distance from and the angle of a virtually established light source.

The system controller 14 carries out interrupt control, time control, memory control, and direct memory access (DMA) control. The main memory 15 temporarily stores a game program and data read from the CD-ROM 5, and also stores various data in relation to the video game. The system ROM 16 stores a basic program for the video game machine unit 1.

The image data expansion decoder 17 serves to decode still or moving image data compressed and encoded according to JPEG or MPEG, which are read from the CD-ROM 5 and stored in the main memory 15. The graphic processing unit 20 plots image data in the frame buffer 24 according to image plotting instructions from the CPU 11, generates a video signal from image data plotted in the frame buffer 24, and outputs the generated video signal to the display monitor 3.

The sound processing unit 21 generates sound signals including BGM and sound effects using the sound buffer 25 and outputs the generated sound signals to the display monitor 3 or another audio system, according to instructions from the CPU 11. The CD-ROM decoder 22 reads a program and data, which have been recorded with an error-correcting code in the CD-ROM 5, from the CD-ROM 5 via the CD-ROM drive 26, stores the read program and data into the CD-ROM buffer 27, effects error correction on the read program and data to decode them into an original program and data, and supplies the program and data to the main memory 15 or the sound processing system 21.

The communication interface 23 controls communications between the CPU 11 and the manual controller 2 and the memory card 4 via the main bus 13 to transfer commands entered from the manual controller 2 to the CPU 11 and store various parameters into the memory card 4 when the video game is interrupted.

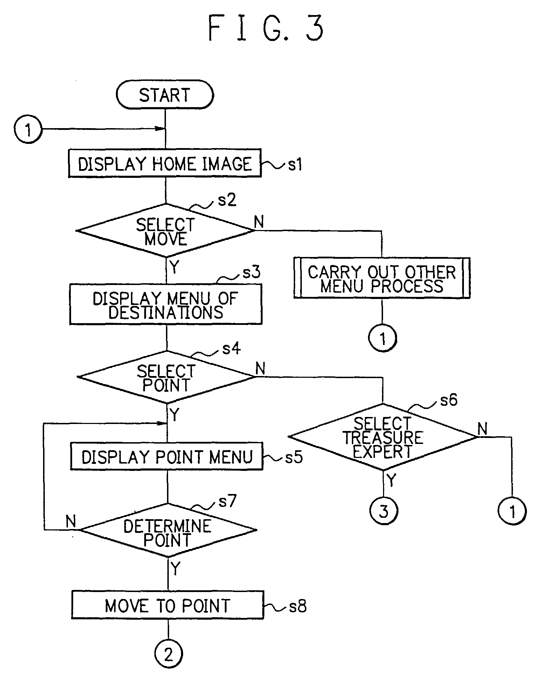

FIGS. 3 through 7 show a processing sequence of a method of controlling the video game apparatus according to the present invention.

The video game that is played by the video game apparatus according to the present invention goes as follows: A game character controlled by the game player, hereinafter referred to as a player character, hears a story from an ex-crewmember of a sunken luxury cruiser, that he left a piece of treasure, i.e., a crown, kept for a wealthy person in a cabin, and then starts diving (skin-diving) at a simple point (stage) where no breathing equipment such as Aqua Lung is necessary. The player character brings back an article and has it examined. If the article has any value, then the player character exchanges it for money, and buys equipment for scuba diving. Thereafter, the player character repeats diving at several stages, continuously collects articles, exchanges them for money, and buys more equipment. After the player character obtains enough equipment to be able to perform scuba diving for a long period of time, the player character starts treasure hunting in the sunken luxury cruiser. When the player character gets hold of the crown, an ending is displayed in the video game.

In the illustrated embodiment, ordinary items or articles whose values are immediately evident when they are acquired are also used in the video game. To avoid being mixed up with those items or articles, articles whose values are not evident when they are acquired and which can be exchanged for money if found valuable by an examination will be referred to as "treasure".

When the game player loads the CD-ROM 5 with the game program stored therein into the video game machine unit 1 and turns on the power supply switch 1b, the CPU 11 performs an ordinary initial process (not shown) identical to the initial process of ordinary video games, i.e., displays an initial image including a manufacturer's logo, checks the memory card 4, displays a tile image, and loads data (to playback a movie to tell a story about how the video game begins if the video game is newly started). Thereafter, the CPU 11 displays a home (position) image of the player character in the video game in step s1.

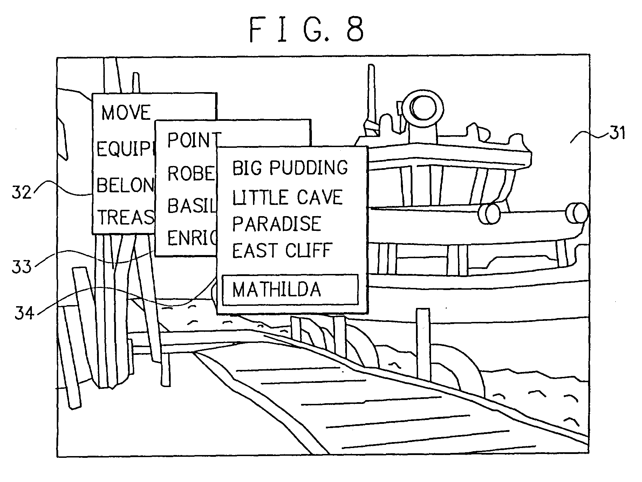

FIG. 8 shows the home image by way of example. Usually, the home image contains only a menu 32 including a plurality of basic selections "MOVE", "EQUIPMENT", "BELONGINGS", and "TREASURE LIST" in a two-dimensional background image of a landing place for a diving boat.

When the game player operates the manual controller 2 to select and determine one of the selections in the menu 32, the CPU 11 displays an image corresponding to the selection and also a next menu including more detailed selections. For example, if the selection "MOVE" in the menu 32 is selected in step s2, then the CPU 11 displays a menu 33 including a plurality of selections about destinations in step s3. If one of the selections "POINT" is selected in the menu 33 in step s4, then the CPU 11 displays a menu 34 including a plurality of selections about points (diving places) as shown in FIG. 8 in step s5.

If another selection than the selection "MOVE" in the menu 32 is selected, then the CPU 11 displays a corresponding menu. However, such a selection will not be described in detail below as it has no direct bearing on the present invention.

If another selection than the selection "POINT" in the menu 33, i.e., "ROBERT'S HOUSE" (the house of the ex-crewmember of the sunken luxury cruiser), "BASILIO'S HOUSE" (diving shop), or "ENRICO'S HOUSE" (Enrico's shop (treasure expert)), then the CPU 11 displays an image of the house (shop). Except the selection of "ENRICO'S HOUSE" in step s6, these other selections will not be described in detail below as they have no direct bearing on the present invention.

The points (diving places) in the menu 34 include "BIG PUDDING" (rocky area), "LITTLE CAVE" (small cave), "PARADISE" (large cave), "EAST CLIFF" (salvage ship), and "MATHILDA" (luxury cruiser). If the game player operates the manual controller 2 to select and determine one of these points in step s7, then the CPU 11 displays an image of the selected point, and control goes to a diving part in step s8.

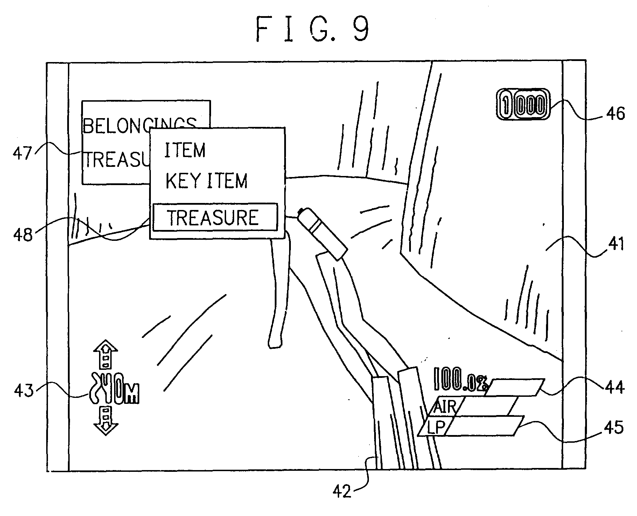

FIG. 9 shows a displayed diving-part image. In FIG. 9, the displayed diving-part image includes a three-dimensional underwater space image 41 rendered according to predetermined map data, a three-dimensional player character image 42 rendered according to predetermined character data, a depth-of-water indicator 43 for indicating the depth of water to which the player character has dived, a remaining oxygen indicator 44 for indicating the remaining amount of oxygen, and a life indicator 45 for indicating a remaining life, and a remaining-number-of-harpoon indicator 46 for indicating a remaining number of harpoons that can be used by a hand harpoon gun.

A menu 47 which can be displayed and selected in the diving-part image contains a plurality of selections "BELONGINGS" and "TREASURE LIST". The menu 47 is displayed when the game player enters a command to open a menu into the manual controller 2. When "BELONGINGS" is selected and determined in the menu 47, a next menu 48 is displayed in the diving-part image.

The diving part will be described below.

When the diving part starts, the CPU 11 loads data relative to a first three-dimensional underwater space at the diving point (stage) in step s11, and constructs a three-dimensional underwater space according to the loaded data in step s12. Then, the CPU 11 places pieces of treasure in the three-dimensional underwater space and stores the data in step s13. Thereafter, the CPU 11 places an item, a key item, and an enemy character in step s14, and then generates a player character, places the player character in an initial position at the diving point and sets an amount of oxygen and a life to initial values in step s15.

The pieces of treasure are placed according to such rules that when data relative to a first three-dimensional underwater space at each diving point are loaded and when data relative to a next three-dimensional underwater space required as the player character moves are loaded, the pieces of treasure are placed indefinitely in positions predetermined for each of the three-dimensional underwater spaces.

More specifically, a certain number of positions where pieces of treasure can be placed are determined in advance within the range of each loaded data. A number of pieces of treasure depending on a predetermined appearance ratio appear in some of those positions, which are not specific and vary depending on the loaded data. How many of the appearing pieces of treasure are valuable, i.e., are genuine, are determined depending on a predetermined probability, i.e., a value allocating ratio. Types of real treasure are also determined in advance for each of the loaded data. Where and how many pieces of what types of treasure (genuine) are to be placed are determined each time data are loaded, according to the above rules.

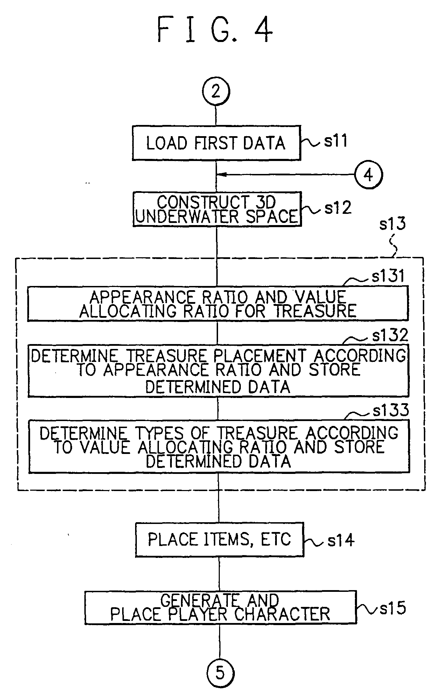

In FIG. 4, positions where pieces of treasure can be placed, an appearance ratio, a value allocating ratio, and types of treasure, which are determined in advance for each three-dimensional underwater space, are loaded when data relative to the three-dimensional underwater space are loaded in step s131. Then, of those positions where pieces of treasure can be placed, the number of positions where pieces of treasure are actually placed (appear) and the positions are randomly determined according to the appearance ratio, and the positions are stored in step s132. Of the placed pieces of treasure, the number of pieces of genuine treasure are determined according to the value allocating ratio, and the types of the pieces of genuine treasure are randomly determined and stored in step s133.

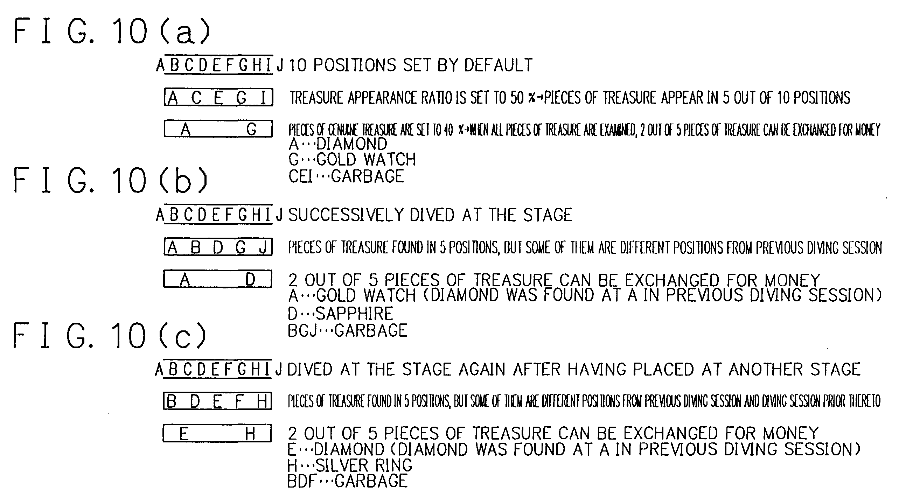

FIGS. 10(a), 10(b), and 10(c) show the placement of pieces of treasure. In the example shown in FIGS. 10(a), 10(b), and 10(c), pieces of treasure are placed at the diving point "LITTLE CAVE" at a second stage. At this stage, data are loaded once. There are established 10 positions (A - J) where pieces of treasure appear or are placed, and types of genuine treasure include diamond, gold watch, sapphire, and silver ring. With the appearance ratio being set to 50 % and the probability of genuine treasure being set to 40 %, positions where pieces of treasure appear and positions and types of genuine treasure are indicated when FIG.10(a) the player character first dives, FIG.10(b) the player character successively dives, and FIG.10(c) the player character dives again after having played at another stage. Even if treasure (genuine) is acquired once, it recovers again at another opportunity, i.e., when data are loaded a next time or subsequently.

Items placed in three-dimensional underwater spaces include a harpoon and an oxygen container, and key items placed in three-dimensional underwater spaces include a key to a door leading to a next stage. Enemy characters placed in three-dimensional underwater spaces include those such as jellyfishes which obstruct the player character, and boss characters such as sharks, shrimps, etc. These enemy characters are placed in given positions.

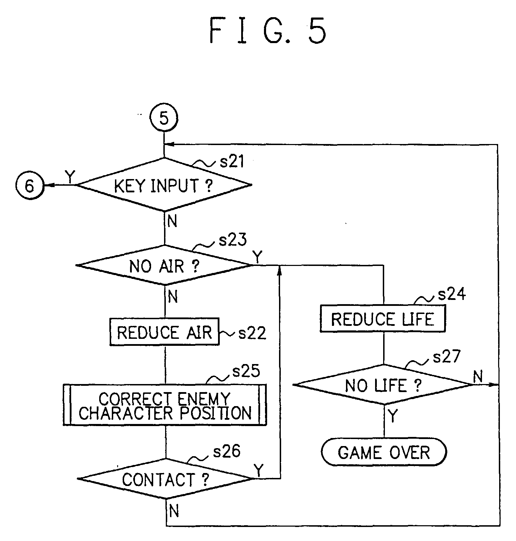

When the placement of characters, pieces of treasure, etc. is completed, the CPU 11 waits for a key input (command) to the manual controller 2 in step s21 shown in FIG. 5. Then, the CPU 11 starts reducing the amount of oxygen (air) in step s22, gradually shortening a gage indicative of the remaining amount of oxygen in the remaining oxygen indicator 44. If the remaining amount of oxygen becomes nil in step s23, the CPU 11 reduces the life in step s24, shortening the remaining life in the life indicator 45.

Some of the enemy characters move by themselves and attack the player character. Even if the game player enters no input into the manual controller 2, the CPU 11 corrects the position of such an enemy character in step s25. If the enemy character with the corrected position contacts the player character in step s26, then the CPU 11 also reduces the life in step s24. If the life is eliminated in step s27, the video game comes to an end.

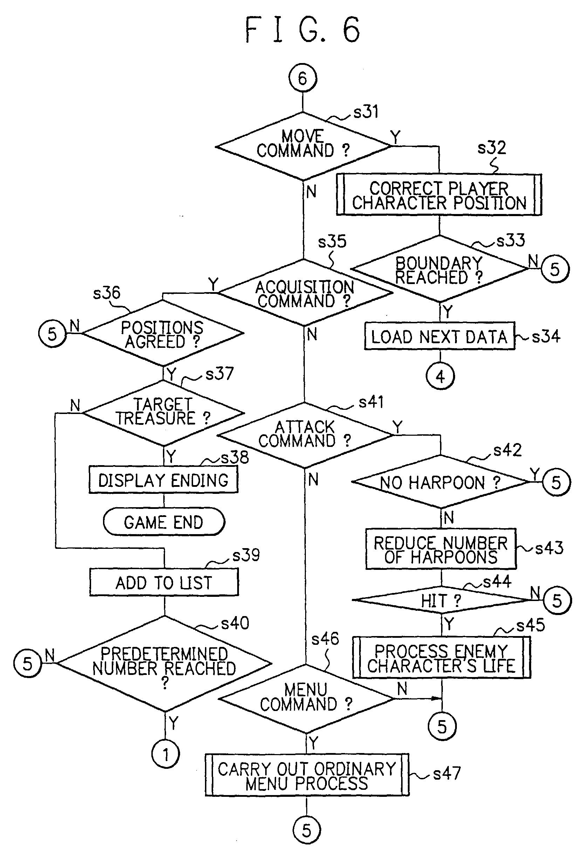

If the game player enters a key input as a command for moving the player character into the manual controller 2 in step S31 shown in FIG. 6, then the CPU 11 corrects the position and direction of the player character in step s32. If the corrected (moved) position of the player character is a position where data relative to a next three-dimensional underwater space need to be loaded, i.e., if the player character has moved to a boundary such as a door, in step s33, then the CPU 11 loads the data relative to a next three-dimensional underwater space in step s34. Then, control goes back to step s12, and repeats the above process from step s12.

If the game player enters a key input as a command for acquiring a piece of treasure or an item into the manual controller 2 in step S35, then the CPU 11 decides whether the position of the player character agrees essentially, but not strictly, with the position of a piece of treasure or an item in step s36. If these position agree with each other, then the CPU 11 decides whether the piece of treasure or item is a target piece of treasure (crown) or not in step s37. If the piece of treasure or item is the target piece of treasure (crown), then the CPU 11 displays an ending on the display monitor in step s38, and ends the video game.

If the piece of treasure or item is other than the target piece of treasure (crown), then the CPU 11 classify the piece of treasure or item as a piece of treasure, an item, or a key item, and adds it to the list in step s39. At this time, the CPU 11 decides whether the number of pieces of treasure on the list has reached a predetermined number (e.g., 50) or not in step s40. If the number of pieces of treasure has reached a predetermined number, then the CPU 11 displays the home image again.

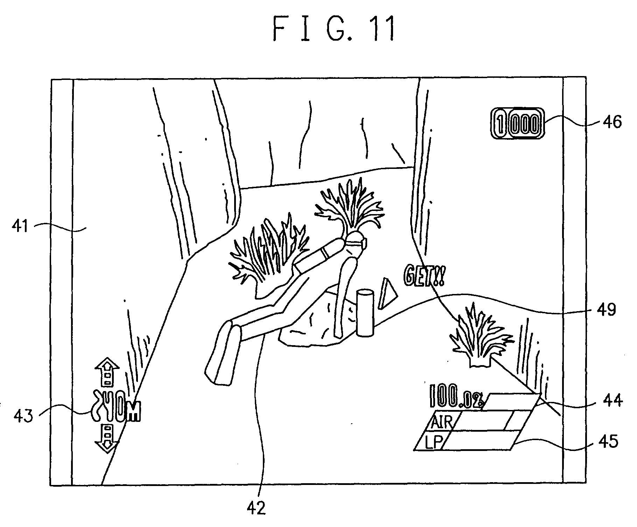

FIG. 11 shows another displayed diving-part image of the video game played by the video game apparatus. The displayed diving-part image shown in FIG. 11 indicates that the player character has acquired a piece of treasure 49.

If the game player enters a key input as a command for attacking an enemy character into the manual controller 2 in step s41, then if the number of harpoons is not "0" in step s42, the CPU 11 decrements the number of harpoons by "1" in step s43, and reduces the numerical value indicative of the number of remaining harpoons in the remaining-number-of-harpoon indicator 46 by "1". The CPU 11 decides whether the harpoon attack hits the enemy character or not in step s44. If the harpoon attack hits the enemy character, then the CPU 11 reduces or eliminates the life of the enemy character in step s45.

If the game player enters a key input as a command for opening a menu into the manual controller 2 in step s46, then the CPU 11 executes an ordinary menu opening process in step s47.

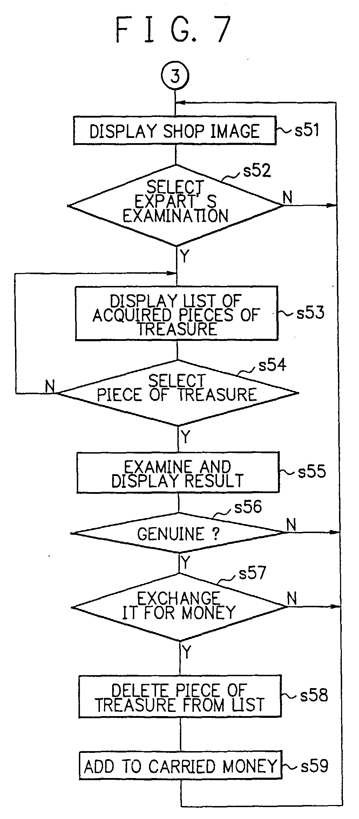

The piece of treasure which has been acquired as described above is examined by the treasure expert, and exchanged for money so as to be able to buy equipment. Specifically, if the "ENRICO'S HOUSE" is selected in the menu 33 in the home image in step s6, then the CPU 11 displays an image of the house and a menu of selections including "CONVERSATION", "EXPERT'S EXAMINATION", etc. in step s51 shown in FIG. 7. If "EXPERT'S EXAMINATION" is selected in step s52, the CPU 11 displays a list of acquired pieces of treasure in step s53. If one of the acquired pieces of treasure is selected in step s54, the selected piece of treasure is examined, and the CPU 11 displays the result, i.e., whether the piece of treasure is genuine or not and, if genuine, its type and monetary value in step s55. If the examined piece of treasure is genuine in step s56, and a selection is made to exchange it for money in step s57, then the CPU 11 deletes the piece of treasure from the list of acquired pieces of treasure in step s58, and adds the money to the sum of money carried by the player character in step s59.

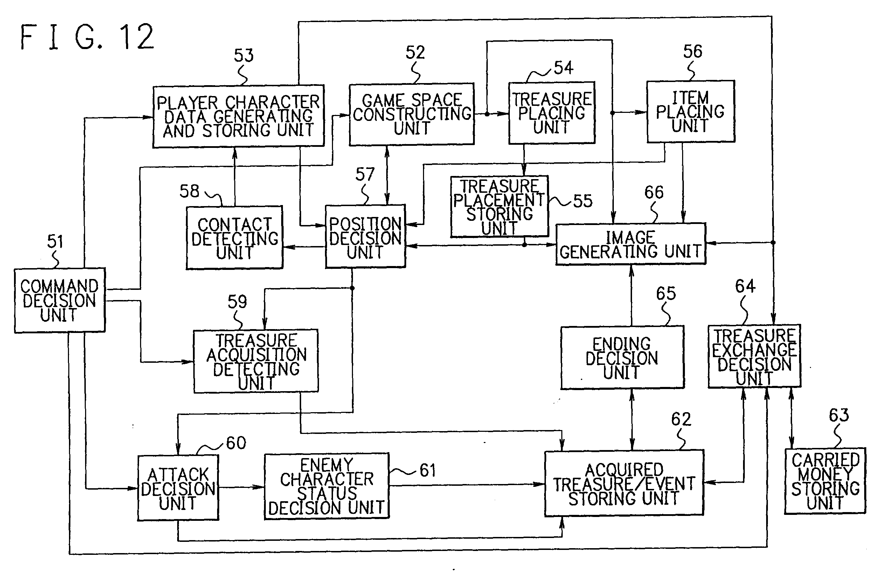

FIG. 12 shows in block form functions performed by the video game apparatus according to the present invention. As shown in FIG. 12, the video game machine has as its functions a command decision unit 51, a game space constructing unit 52, a player character data generating and storing unit 53, a treasure placing unit 54, a treasure placement storing unit 55, an item placing unit 56, a position decision unit 57, a contact detecting unit 58, a treasure acquisition detecting unit 59, an attack decision unit 60, an enemy character status decision unit 61, an acquired treasure/event storing unit 62, a carried money storing unit 63, a treasure exchange decision unit 64, an ending decision unit 65, and an image generating unit 66.

The command decision unit 51 detects a key input to the manual controller 2, decides what command is entered by the game player, and outputs the command to various parts of the video game apparatus.

The game space constructing unit 52 loads data relative to a game space from the CD-ROM 5 based on a key input to the manual controller 2 as detected by the command decision unit 51, and constructs game spaces according to the loaded data.

The player character data generating and storing unit 53 reads data of the player character from the CD-ROM 5 which stores the game program and character data, generates a player character image based on a key input to the manual controller 2 as detected by the command decision unit 51, and stores the generated player character image together with its circumstances, i.e., the position and direction thereof in a three-dimensional underwater space, the amount of oxygen, the life, and the purchased equipment.

The treasure placing unit 54 places pieces of treasure corresponding to a three-dimensional underwater space of the game spaces that have been constructed by the game space constructing unit 52, according to the above rules.

The treasure placement storing unit 55 stores the positions and types (e.g., values) of the pieces of treasure placed by the treasure placing unit 54.

The item placing unit 56 places an item, a key item, and an enemy character corresponding to the three-dimensional underwater space constructed by the game space constructing unit 52, and stores their data.

The position decision unit 57 processes the data from the game space constructing unit 52, the player character data generating and storing unit 53, the treasure placement storing unit 55, and the item placing unit 56 to determine the positional relationship between the player character, the pieces of treasure, the item, the key item, and the enemy character in the three-dimensional underwater space.

The contact detecting unit 58 detects a contact between the player character and the enemy character and an attack from the enemy character based on the determined positional relationship from the position decision unit 57, and reduces the life of the player character.

The treasure acquisition detecting unit 59 detects an acquisition of a piece of treasure, etc. based on the determined positional relationship from the position decision unit 57 and a key input to the manual controller 2 as detected by the command decision unit 51.

The attack decision unit 60 detects an attack made by the player character based on a key input to the manual controller 2 as detected by the command decision unit 51, decides whether the attack is directed to the enemy character or not based on the detected attack and the determined positional relationship from the position decision unit 57, and, if the attack is directed to the enemy character, notifies the enemy character status decision unit 61.

The enemy character status decision unit 61 reduces or eliminates the life of the enemy character based on the attack against the enemy character as detected by the attack decision unit 60. If the enemy character status decision unit 61 determines that the attack has defeated a boss character, indicating that an event has been cleared, then the enemy character status decision unit 61 stores the cleared event in the acquired treasure/event storing unit 62.

The acquired treasure/event storing unit 62 stores the data of a piece of treasure acquired by the player character and an event cleared by the player character.

The carried money storing unit 63 stores the sum of money that is carried by the player character and can be used to buy equipment.

The treasure exchange decision unit 64 determines that the player character has moved to a predetermined position in the game space based on the position of the player character in the game space and a command entered into the manual controller 2 by the game player, exchanges the piece of treasure stored in the acquired treasure/event storing unit 62 for an amount of money commensurate with the monetary value of the piece of treasure, adds the amount of money to the carried money storing unit 63, and deletes the piece of treasure from the acquired treasure/event storing unit 62.

The ending decision unit 65 decides whether the player character has acquired the target piece of treasure (crown) or not based on the data stored in the acquired treasure/event storing unit 62, and, if the player character has acquired the target piece of treasure (crown), notifies the image generating unit 66.

The image generating unit 66 combines the data from the game space constructing unit 52, the player character data generating and storing unit 53, the treasure placement storing unit 55, the item placing unit 56, and the treasure exchange decision unit 64 thereby to generate an image, and displays the generated image on the display monitor 3. The image generating unit 66 also generates an ending image based on the notification from the ending decision unit 65, and displays the generated ending image on the display monitor 3.

While the video game apparatus according to the present invention has been shown as a video game machine for home use, the principles of the present invention are also applicable to video game machines in arcade game facilities and amusement parks.

In the video game played by the video game apparatus according to the present invention, the player character cannot immediately equip or use an article placed in a game space when the player character acquires the article, but needs to exchange it for an amount of money commensurate with the monetary value thereof only when the player character moves to a given position, and then buy equipment with the amount of money. Therefore, the game player is required to collect articles with more enthusiasm than with conventional video games, and will be attracted to the video game for an increased period of time.

Furthermore, since articles placed in a game space appear in indefinite positions, the game player finds it difficult to gain those articles, and needs to play repeatedly in one game space. Accordingly, the game player will find the video game highly interesting for a long period of time.

## Claims

1. A method of controlling a video game apparatus having input means controllable by a game player for entering a command, image display means for generating and displaying a game image including a game space and a game character, article placing means for placing articles with predetermined monetary values in the game space, article placement storing means for storing data of positions where the articles are placed in the game space and data of the monetary values of the articles, acquired article storing means for storing data of articles carried by the game character, and carried money storing means for storing a sum of money carried by the game character and consumable to buy equipment, said method comprising the steps of:
controlling said input means to store an article acquired by the game character and a monetary value thereof into said acquired article storing means;
when said input means is controlled to move the game character to a predetermined position in the game space, exchanging the article stored in said acquired article storing means for an amount of money commensurate with the monetary value of the article, adding the amount of money to said carried money storing means, and deleting the article from said acquired article storing means; and
controlling said input means for the game character to buy equipment with the amount of money stored in said carried money storing means.

2. A method according to claim 1, further comprising the step of:
when said input means is controlled to move the game character to a predetermined position in the game space and the article stored in said acquired article storing means is exchanged for an amount of money commensurate with the monetary value of the article, displaying the monetary value of the article stored in said acquired article storing means with said image display means.

3. A method according to claim 1 or 2, wherein the articles placed by said article placing means include an article with no monetary value.

4. A method according to any one of claims 1 through 3, wherein said game space is divided into a simulated underwater area and a simulated overwater area, said article placing means comprising means for placing articles in said simulated underwater area, with said predetermined position being located in said simulated overwater area.

5. A method according to claim 4, further comprising the steps of:
controlling said input means to change the position of the game character in said simulated underwater area; and
generating and displaying, with said image display means, a game image including a game space and a game character based on the changed position of the game character.

6. A method according to any one of claims 1 through 5, wherein said game space generated and displayed by said image display means comprises a plurality of stages.

7. A method according to any one of claims 1 through 6, further comprising the step of:
determining the number of articles to be placed by said article placing means and positions where the articles are to be placed thereby based on a predetermined appearance ratio of articles in the game space.

8. A method according to any one of claims 1 through 7, further comprising the steps of:
determining in advance positions where articles can be placed by said article placing means; and
selecting and determining articles to be placed by said article placing means based on an appearance ratio of articles in the game space, which has been predetermined from said determined positions.

9. A video game apparatus comprising:
input means controllable by a game player for entering a command;
game space generating means for generating a game space according to prepared data and based on an entered command;
game character generating means for generating a game character in the game space according to prepared data and based on an entered command;
article placing means for determining an appearance ratio of articles and a value allocating ratio according to prepared data, determining positions where articles are to be placed, of predetermined positions where articles can appear in the game space, based on said appearance ratio, and determining monetary values of the articles placed in the determined positions based on said value allocating ratio;
article placement storing means for storing data of positions where the articles are placed in the game space and data of the monetary values of the articles;
acquired article storing means for storing data of articles carried by the game character;
carried money storing means for storing a sum of money carried by the game character and consumable to buy equipment;
article acquisition detecting means for detecting when the game character has acquired an article based on the positions of the game character and the articles in the game space and an entered command, and storing data of the acquired article and a monetary value thereof into said acquired article storing means;
article exchange decision means for detecting when the game character has moved to a predetermined position in the game space based on the position of the game character in the game space and an entered command, exchanging the article stored in said acquired article storing means for an amount of money commensurate with the monetary value thereof, adding the amount of money to said carried money storing means, and deleting the article from said acquired article storing means;
equipment purchasing means for enabling the game character to buy equipment with the amount of money stored in said carried money storing means based on the position of the game character in the game space and an entered command; and
image generating means for generating a game image based on the generated game space and the game character.

10. A computer-readable medium storing a video game program, wherein when said video game program is read by a computer, the video game program controls the computer to implement:
game space generating means for generating a game space according to prepared data and based on an entered command;
game character generating means for generating a game character in the game space according to prepared data and based on an entered command;
article placing means for determining an appearance ratio of articles and a value allocating ratio according to prepared data, determining positions where articles are to be placed, of predetermined positions where articles can appear in the game space, based on said appearance ratio, and determining monetary values of the articles placed in the determined positions based on said value allocating ratio;
article placement storing means for storing data of positions where the articles are placed in the game space and data of the monetary values of the articles;
acquired article storing means for storing data of articles carried by the game character;
carried money storing means for storing a sum of money carried by the game character and consumable to buy equipment;
article acquisition detecting means for detecting when the game character has acquired an article based on the positions of the game character and the articles in the game space and an entered command, and storing data of the acquired article and a monetary value thereof into said acquired article storing means;
article exchange decision means for detecting when the game character has moved to a predetermined position in the game space based on the position of the game character in the game space and an entered command, exchanging the article stored in said acquired article storing means for an amount of money commensurate with the monetary value thereof, adding the amount of money to said carried money storing means, and deleting the article from said acquired article storing means;
equipment purchasing means for enabling the game character to buy equipment with the amount of money stored in said carried money storing means based on the position of the game character in the game space and an entered command; and
image generating means for generating a game image based on the generated game space and the game character.
